Europäisches Patentamt

European Patent Office

Office européen des brevets

(19)

(11) Veröffentlichungsnummer: **0 073 899**
A2

(12) # EUROPÄISCHE PATENTANMELDUNG

(21) Anmeldenummer: 82106149.6

(22) Anmeldetag: 09.07.82

(51) Int. Cl.³: **C 08 J 9/22**
//(C08J9/22, C08L27/06)

(30) Priorität: 05.09.81 DE 3135199

(43) Veröffentlichungstag der Anmeldung:
16.03.83 Patentblatt 83/11

(84) Benannte Vertragsstaaten:
AT BE CH DE FR GB IT LI NL

(71) Anmelder: CHEMISCHE WERKE HÜLS AG
- RSP Patente / PB 15 - Postfach 13 20
D-4370 Marl 1(DE)

(72) Erfinder: Grundmann, Raban, Dr.
Ludwigshafener Strasse 6
D-4370 Marl(DE)

(54) Verfahren zur Herstellung von Dämmstoffen auf der Grundlage von Polyvinylchlorid.

(57) Es handelt sich um ein Verfahren zur Herstellung von Dämmstoffen auf der Grundlage von Polyvinylchlorid, wobei extrem leichte Polyvinylchloridpartikel oder geknäuelte Fasern mit einer Schüttdichte von 10 bis 200 g/l entweder mit Folien ummantelt oder durch Wärme oder Zugabe von Bindemitteln, wie Klebstoffen, Schmelzklebern, härtbaren Polymeren oder vorgeschäumten blähfähigen Polymeren, zu Leichtkörpern verbunden werden.

EP 0 073 899 A2

Verfahren zur Herstellung von Dämmstoffen auf der Grundlage von Polyvinylchlorid

Die Herstellung geschäumter Polyvinylchlorid-Formmassen oder -Folien durch Verwendung chemischer und physikalischer Treibmittel oder durch den Einsatz von druckbegasten Extrudern gehört zum Stand der Technik (s. z. B. Kunststoff-Taschenbuch, 20. Ausgabe, Carl Hanser Verlag 1977, Seite 277, 349 oder DE-OS 29 44 068, Shin Etsu Chem.). Im allgemeinen werden geschlossenzellige Schaumstoffe mit Dichten von 40 bis 800 g/l hergestellt. Diese Polyvinylchlorid-Schaumstoffe haben sich trotz ihrer inhärenten Schwerentflammbarkeit als Wärmedämmaterial nicht durchsetzen können, weil die erzielten Raumgewichte entweder zu hoch liegen, oder die Herstellung durch den Verbrauch an Treibmitteln und den Einsatz teurer Verfahren zu kostenintensiv ist.

Aufgabenstellung der Erfindung ist die Herstellung von schwerbrennbaren Dämmstoffen auf Polyvinylchlorid-Grundlage nach einfachen Verfahren, die Dichten < 200 g/l aufweisen.

Die Aufgabenstellung wurde gelöst durch ein Verfahren, wie es in den Patentansprüchen beschrieben ist.

Die Herstellung der voluminösen Polyvinylchlorid-Partikel mit einer Schüttdichte von 10 bis 200 g/l erfolgt durch Ausfällen einer Lösung des Polyvinylchlorids in einem erwärmten, bewegten Nichtlösemittel unter Abdestillieren des Lösemittels, wobei das Nichtlösemittel einen Siedepunkt > 100 °C bei Normaldruck aufweist und die Temperatur des Nichtlösemittels 40 bis 120 °C oberhalb des Siedepunktes des Lösemittels liegt, jedoch 100 °C nicht unter- und 180 °C nicht überschreitet.

Als Ausgangsmaterial zur Herstellung der voluminösen Polyvinylchlorid-Partikel werden Homo- oder Copolymerisate des Vinylchlorids verwendet. Comonomere, wie Vinylacetate, Acrylate, Vinylether, Acrylnitril, Maleinsäure, Fumarsäureester, Vinylidenchlorid, Propylen, Ethylen können bis zu 20 Molprozent im Polyvinylchlorid enthalten sein. Außerdem eignen sich nachchlorierte PVC-Typen mit Chlorgehalten bis zu 65 % besonders für das Verfahren.

Die Homo- und Copolymerisate des Vinylchlorids können durch alle bekannten Methoden hergestellt werden, z. B. durch Massepolymerisation, Emulsionspolymerisation, Suspensions-, Mikrosuspensionspolymerisation und Lösungspolymerisation, wie sie in der Monographie "Polyvinylchlorid und Vinylchlorid-Mischpolymerisate" von H. Kainer, Springer-Verlag Berlin/Heidelberg/New York (1965) beschrieben sind, und zwar die Massepolymerisation auf den Seiten 7 bis 10, die Emulsionspolymerisation auf den Seiten 34 bis 59, die Suspensionspolymerisation auf den Seiten 12 bis 34 und die Lösungspolymerisation auf den Seiten 10 bis 11.

Die Polymeren werden in geeigneten Lösemitteln, die einen Siedepunkt unter 160 °C, vorzugsweise unter 100 °C, bei Normaldruck aufweisen sollten, gelöst.

Als Lösemittel eignen sich beispielsweise Ether, wie Tetrahydrofuran, Dibutylether, Dioxan, Ester, wie Ethylacetat, Ethylpropionat, Ethylencarbonat, Ketone, wie Aceton, Cyclohexanon, Methylethylketon, Methylisobutylketon, 2-Pentanon, 3-Pentanon, Cyclopentanon, Chlorkohlenwasserstoffe, wie Methylenchlorid, Tetrachlorethan, Tetrachlorkohlenstoff, Dichlorethan, 1,1,1-Trichlorethan, Aromaten, wie Benzol, Toluol oder polare Flüssigkeiten, wie Schwefelkohlenstoff, die in reiner Form oder als Mischungen verwendet werden. Bevorzugt werden die Lösungsmittel, die aus der Faserherstellung von PVC bekannt sind, eingesetzt, z. B. Tetrahydrofuran (THF), Cyclohexanon oder Mischungen, wie THF/Butylacetat, THF/Methylenchlorid, $CS_2$/Aceton, $CS_2$/Methylenchlorid oder Aceton/Benzol.

O.Z. 3756
0073899

Die Lösungen sollten Konzentrationen von 1 bis 25 Gewichtsprozent aufweisen; vorzugsweise verwendet man eine 5- bis 15 %ige Lösung in Tetrahydrofuran.

Als Nichtlösemittel eignen sich Flüssigkeiten, die Polyvinylchlorid weder lösen noch anquellen und einen Siedepunkt > 100 °C, vorzugsweise 120 °C, bei Normaldruck aufweisen. Gute Ergebnisse erzielt man mit Glykolen, wie Ethylenglykol, Propylenglykol, Polyglykolen, wie Diethylenglykol, Triethylenglykol, mehrwertigen Alkoholen, wie Glycerin, Alkoholen, wie n-Hexanol, Carbonsäuren, wie Essigsäure, Propionsäure.

Auch die Verwendung der wäßrigen Lösungen von anorganischen Salzen, wie z. B. von NaCl, $CaCl_2$, $KNO_3$, $MgSO_4$, Natriumacetat oder von wäßrigen Lösungen organischer Zusätze, wie z. B. von Mischungen Glykol/Wasser, Glycerin/Wasser ist mit gutem Ergebnis möglich.

Der Nichtlöser wird bei 100 bis 180 °C vorgelegt; vorzugsweise verwendet man Glykol bei einer Temperatur von 120 bis 160 °C. Kennzeichnend für das Verfahren ist, daß die Temperatur des Nichtlösers unabhängig vom gewählten Druck 40 bis 120 °C und vorzugsweise 60 bis 100 °C über dem Siedepunkt des Lösemittels liegt.

Die Fällung des Polyvinylchlorids kann in sehr unterschiedlichen Apparaturen durchgeführt werden. So gewinnt man das voluminöse Material am einfachsten, indem man die Polyvinylchlorid-Lösung in die gerührte, aufgeheizte Vorlage des Nichtlösers tropft und das Lösungsmittel abdestilliert und kondensiert. Besonders günstige Ergebnisse hinsichtlich des Raumgewichtes werden erhalten, wenn die PVC-Lösung mit Hilfe einer Einstoff- oder Zweistoffdüse unter Druck oder mit Treibgas bzw. Treibdampf versprüht wird. Die Zugabe der Polymerlösung erfolgt also vorteilhaft in Tropfenform, als dünner Strahl oder als Nebel.

- 4 -　　　　　　　　　　0073899

Durch die Anwendung feiner Tröpfchen erzeugt man ein mehr flockiges Material, durch die Anwendung eines dünnen Strahles ein mehr fasriges Material.

Der Nichtlöser wird durch eine übliche Rührvorrichtung oder in Form eines ablaufenden Flüssigkeitsfilmes in Bewegung gehalten. Das Verfahren kann chargenweise oder kontinuierlich durchgeführt werden. Die Anwendung von Druck oder Vakuum bei der Fällung ist möglich, jedoch ist die Arbeitsweise bei Normaldruck bevorzugt.

Die Abtrennung des ausgefällten, voluminösen Polyvinylchlorids erfolgt durch Filter, Siebvorrichtungen oder Zentrifugieren. Reste des Nichtlösemittels können durch Waschen mit Wasser entfernt werden. Das Trocknen erfolgt durch Verblasen mit Luft, Vakuumtrocknen, Aufheizen bis 120 $^\circ$C oder einer Kombination der genannten Möglichkeiten.

Die PVC-Partikel können auch durch andere, beliebige Fällungsverfahren, spezielle Polymerisationsprozesse, Sprühtrocknen, Verspinnen oder durch mechanische Verfahren, wie Hobeln, Raspeln, Drehen, Sägen oder Mahlen erhalten worden sein. Sie sind gekennzeichnet durch eine Schüttdichte von 10 bis 200 g/l, vorzugsweise 20 bis 80 g/l. Sie liegen in Form von voluminösen Flocken oder als geknäuelte Fasern vor und weisen aufgrund der sperrigen, offenporigen Struktur und der vorhandenen Lufteinschlüsse die obengenannte niedrige Schüttdichte auf. Die Schüttdichten wurden durch Einfüllen des Fällungsproduktes in einen 1 l-Standzylinder (30 cm Höhe) ohne Rütteln oder Verdichten und anschließendes Auswiegen ermittelt. Die Einzelteilchen weisen ein Gewicht von weniger als 1 g, vorzugsweise < 0,1 g auf, die Mehrzahl der Teilchen wiegt zwischen 100 und 0,01 mg, vorzugsweise 10 bis 0,1 mg. Bei gemahlenen Produkten liegt das maximale Partikelgewicht unter 10 mg, vorzugsweise unter 1 mg. Die Mehrzahl der Teilchen liegt im Bereich 1 bis 0,0001 mg, vorzugsweise 0,1 bis 0,001 mg.

Für die Herstellung der voluminösen Polyvinylchlorid-Partikel werden folgende Beispiele aufgeführt:

Beispiel 1

A) Herstellung des Polyvinylchlorids:

In einem Druckautoklav werden 2 700 Teile Vinylchlorid in Gegenwart von 4 650 Teilen Wasser, 0,2 Teilen eines Celluloseethers, 0,11 Teilen eines Teilesters eines Polyols und 0,2 Teilen Dilauroylperoxid bei 55 $^{o}$C und einem Druck von 8 atü unter Rühren 8 Stunden polymerisiert. Der Autoklav wird auf Normaldruck entspannt und 30 Minuten auf 150 Torr evakuiert. K-Wert: 70.

B) In einer 4 1-Rührapparatur mit Tropftrichter und Destillationsbrücke werden 2 1 Ethylenglykol auf 150 $^{o}$C aufgeheizt. Man tropft bei dieser Temperatur unter Rühren im Verlauf von 2 Stunden eine Lösung von 50 g Polyvinylchlorid in 950 g Tetrahydrofuran (= 5 %ige Lösung) zu. Während Tetrahydrofuran abdestilliert und kondensiert wird, scheidet sich das Polyvinylchlorid in flockiger Form ab. Es wird filtriert, mit Wasser und Methanol gewaschen und im Vakuumheizschrank bei Temperaturen bis 120 $^{o}$C getrocknet. Ethylenglykol und Tetrahydrofuran sind für weitere Versuche wieder verwendbar. Ausbeute: 49 g Polyvinylchlorid; Schüttdichte: 40 g/l. Die größten PVC-Partikel wiegen 0,1 bis 0,2 g. Die Auswaage von 50 durchschnittlichen Teilchen ergab 300 mg, das ergibt ein mittleres Teilchengewicht von 6 mg.

Beispiel 2 a

In einen 6 1-Rührkolben mit Tropftrichter und Destillationsaufsatz werden 3 1 Glykol und 1 1 Wasser bei 120 $^{o}$C vorgelegt. Eine Lösung von 50 g PVC in 950 g Tetrahydrofuran wird unter Rühren zugetropft. Während das abgedampfte THF in der Destillationsvorlage aufgefangen wird, scheidet sich das PVC in Form feiner Flocken ab. Nach dem Abtrennen über eine Nutsche, dem Waschen mit Wasser und dem Trocknen im Heißluftofen bei 100 $^{\circ}$C erhält man ein voluminöses, weißes Material der Schüttdichte 18 g/l. Durch Mahlen in einer Stiftsmühle (Fa. Alpine, Typ 160 Z) steigt die Schüttdichte auf 22 g/l an. Das Gewicht von 100 Teilchen beträgt 0,2 mg, d. h. die Teilchen wiegen im Mittel 0,002 mg.

Beispiel 2 b

Entsprechend Beispiel 1 wird eine Lösung von 50 g Polyvinylchlorid in 720 g Tetrahydrofuran und 230 g Methylenchlorid in 2 l Ethylenglykol bei 140 $^{\circ}$C ausgefällt. Die Aufarbeitung erfolgt analog Beispiel 1. Schüttdichte: 31 g/l.

Beispiel 3

Ein Kilogramm einer 15 %igen Lösung von Polyvinylchlorid in Tetrahydrofuran wird mit Hilfe einer Kolbenpumpe über Metalleitungen mit 5 bar Druck durch eine 0,2 mm Düse in eine Vorlage aus 2 l Ethylenglykol (von 160 $^{\circ}$C) gesprüht. Das Glykol befindet sich in einem 4 l-Rührkolben mit aufgesetzter Destillationsbrücke und Destillationsvorlage zum Auffangen des abdestillierten Tetrahydrofurans. Nach dem Abkühlen wird durch ein feinmaschiges Sieb filtriert und mit Wasser gewaschen. Man erhält nach dem Trocknen 146 g gefälltes Polyvinylchlorid mit der Schüttdichte 36 g/l.

Beispiel 4

Ein Liter einer 5 %igen Lösung von Polyvinylchlorid in Tetrahydrofuran wird mit 3 bar Druck über eine 0,1 mm Düse als feiner Strahl in eine 135 $^{\circ}$C heiße, gerührte Glykolvorlage dosiert. Die Aufarbeitung erfolgt wie in den vorangegangenen Beispielen. Man erhält ein feinfaseriges Material der Schüttdichte 22 g/l.

Beispiel 5

Eine 10 %ige Lösung von nachchloriertem Polyvinylchlorid (Chlorgehalt: 65 %) in Tetrahydrofuran wird in einer Apparatur entsprechend Beispiel 1 bei 120 °C, 140 °C und 160 °C in Ethylenglykol getropft. Nach dem Abtrennen, Waschen und Trocknen erhält man folgende Schüttdichten:

Temperatur des Glykols: 120 °C   Schüttdichte:   87 g/l
                        140 °C                   83 g/l
                        160 °C                  120 g/l

Beispiel 6

1 000 g einer 5 %igen Tetrahydrofuranlösung eines Copolymerisats aus Vinylchlorid/Vinylacetat (95/5) werden gemäß Beispiel 1 bei 130 °C in Glykol ausgefällt. Nach dem Abtrennen, Waschen und Trocknen erhält man 48,5 g eines flockigen, elastischen Materials. Schüttdichte: 29 g/l.

Die erfindungsgemäße Herstellung von Dämmstoffen auf der Grundlage von Polyvinylchlorid erfolgt nun unter Einsatz der voluminösen Polyvinylchlorid-Partikel oder geknäuelten Fasern, deren Herstellung oben dargelegt wurde, in folgender Weise:

1a) Die einfachste Möglichkeit ist die Herstellung von Schaumstoffen unter Einwirkung von Wärme. Diese Einwirkung kann auch in Form eines Heißluftstromes oder eines Dampfstoßes, gegebenenfalls unter Druck, erfolgen. Dazu werden die Partikel in Formen gefüllt und durch Temperatureinwirkung an der Oberfläche erweicht. Die erforderlichen Temperaturen liegen bei 160 bis 220 °C, vorzugsweise bei 165 bis 180 °C. Bei sehr kurzzeitiger Temperatureinwirkung können jedoch auch bis zu 300 °C angewendet werden. So erzielt man besonders glatte Oberflächen der Schaumkörper, durch kurzzeitiges Aufschmelzen der Oberfläche - gegebenenfalls unter Druck - bei Temperaturen von 180 bis 300 °C, vorzugsweise 200 bis 250 °C.

1b) Eine weitere Möglichkeit zur Herstellung von Dämmstoffen besteht in der Zugabe von Bindemitteln zu den Partikeln, gegebenenfalls Einwirkung von Wärme. Die voluminösen Polyvinylchlorid-Partikel können zusammen mit bis zu 50 Gewichtsprozent, vorzugsweise mit 10 bis 30 Gewichtsprozent des Bindemittels in eine Form eingebracht und dort gemeinsam erwärmt werden. Als Bindemittel eignen sich die folgenden Stoffe: anorganische Klebstoffe, wie Wasserglas, organische Klebstoffe, wie sie beispielsweise in Ullmanns Encyklopädie der technischen Chemie, 4. Auflage, Band 14, Seite 228 bis 260, beschrieben sind, oligomere und polymere Schmelzkleber, wie Copolyamid-Schmelzkleber und Polyesteramid-Schmelzkleber (vgl. Adhesion 1, Seiten 7 bis 14, (1969); Ibida 12, Seiten 485 bis 487; Adhesion Ages, 15 (1972), Seiten 39 bis 41) oder auch Polyetheresteramide, härtbare Polymere, z. B. ungesättigte Polyester, oder härtbare Polyurethane, vorgeschäumte blähfähige Polystyrolteilchen oder schäumbare Polyurethan-Copolymere.

Die Struktur und Dichte der Bindemittel sollte möglichst der des Dämmstoffes ähnlich sein, um eine gute Mischbarkeit zu gewährleisten. Gegebenenfalls kann der Zusatz von Dispergiermitteln, wie z. B. expandiertem Kieselgel, Talkum, Kreide, Polytetrafluorethylen zur Verhinderung von Agglomeration des Bindemittels von Vorteil sein.

2) Es können auch Mehrschichtenplatten hergestellt werden. Diese erhält man beispielsweise durch Laminieren der Oberfläche von Schaumkörpern durch eine Aluminiumfolie, durch Kunststoffolien aus PVC, Polyolefin, usw. durch Glasfasergewebe oder durch Celluloseschichtstoffe. Auch die Kombination mit anderen Schaumstoffen beispielsweise aus Polystyrol oder Polyurethan und die Kombination mit Platten aus Kunststoff oder Holz liegt im Rahmen der Erfindung, sofern wenigstens eine Schicht einer solchen Platte zu mehr als 50 Gewichtsprozent aus den voluminösen PVC-Teilchen besteht.

3) Eine andere Möglichkeit zur Herstellung von Dämmstoffen besteht in der allseitigen Ummantelung des losen PVC-Materials durch Folien, Textilbahnen, Kunststoffplatten oder feinmaschigen Netz- oder Gewebestücken. Beispiele für solche Dämmstoffe sind Kissen, gesteppte Decken oder mehrschichtige, geschweißte Folienbahnen, mit losem PVC-Schaum gefüllte Hohlkörper.

Die Dämmstoffe können strukturverstärkende Zusätze, wie Fasern oder voluminöse Füllstoffe, enthalten. Beispiele für Faser wären Glas-, Mineral-, Metall-, Asbest- oder Viskosefasern. Die Füllstoffe können Aerosil, Blähton, Perlite, Aluminiumsilikate und geblähte Schlacken oder Gläser sein.

Die Dichte der Dämmstoffe beträgt 20 bis 200 g/l, vorzugsweise 40 bis 100 g/l.

Die erhaltenen Dämmstoffe weisen folgende Vorteile auf:

1. Geringe Wärmeleitfähigkeit bei guter Wasserdampfdiffusion.

0073899

O.Z. 3756

2. Gute Schalldämmung durch die offenporige Struktur.

3. Selbstverlöschende Eigenschaften, kein flammendes Abtropfen, z. T. zeitlich begrenzter Flammwiderstand durch Verkohlung.

4. Chemische Resistenz gegen Säuren, Laugen und viele Lösungsmittel.

Die Wärmeleitfähigkeit wurde mit dem Gerät "Anacon, Modell 88" bei einer Temperaturdifferenz von 28 $^{o}$C gemessen.

Zur Prüfung des Flammwiderstandes wurde eine 3 cm dicke Schaumplatte (Fläche 20 x 20 cm) waagerecht eingespannt. Auf die Mitte der Platte wurde die Sparflamme eines Bunsenbrenners (Flammhöhe 3 cm, Brennerabstand 1,5 cm) gerichtet, und die Zeit bis zum Durchschlagen der Flamme durch die Oberfläche des Prüfkörpers wurde gestoppt.

Beispiele 7 bis 15 geben Möglichkeiten für die Herstellung von Dämmstoffen wieder, Beispiel 16 enthält einige Testergebnisse.

Beispiel 7

In eine gelochte Metallform der Innenabmessungen 20 x 20 x 3 cm werden 65 g eines flockigen Polyvinylchlorid-Fällungsproduktes (Schüttdichte ca. 18 g/l, gemäß Beispiel 2 a) gefüllt. In einem Heißluftofen wird die Form bei mehrmaligem Wenden während 90 Minuten auf 165 bis 170 $^{o}$C gebracht. Es entsteht eine offenporige, zusammenhängende Schaumstoffplatte. Der Schrumpf beträgt ca. 10 %, die Dichte der Platte beträgt 60 g/l.
Durch kurzzeitiges Andrücken einer 220 $^{o}$C heißen Metallplatte (z. B. in einer Kunststoffpresse) erhält man eine geschlossene, völlig glatte Oberfläche des Schaumkörpers.

## Beispiel 8

Entsprechend Beispiel 1 wird die Metallform mit voluminösen Polyvinylchlorid-Flocken gefüllt. Die Form wird in einen auf 160 °C vorgeheizten Autoklaven gebracht und während einiger Sekunden mit Heißdampf (220 °C/20 bar) beschickt. Nach dem Abkühlen erhält man eine feste, poröse PVC-Platte der Dichte 64 g/l, d. h. der Schrumpf beträgt ca. 17 %.

## Beispiel 9

Voluminöses Polyvinylchlorid-Fällungsprodukt (gemäß Beispiel 1, Schüttdichte 40 g/l) wird in einer Mühle (Alpine, Typ Z 160) zu einem feinteiligen Material der Schüttdichte 70 g/l gemahlen. Dieses wird

a) mit 10 Gewichtsprozent und

b) mit 30 Gewichtsprozent eines pulverförmigen Schmelzklebers auf Polyamidbasis (Fp. 133 °C) gut vermischt und dann in die Metallform (20 x 20 x 3 cm) gefüllt. Die Form wird 1 Stunde auf 145 °C aufgeheizt.

Die Schaumstoffplatten weisen nach dem Entformen Dichten von

a)  90 g/l und

b)  120 g/l auf.

## Beispiel 10

a) Gemahlenes PVC-Fällungsprodukt (Schüttdichte 22 g/l, gemäß Beispiel 2 a) wird mit 10 Gewichtsprozent eines Polyamidschmelzklebers (Fp. 95 bis 100 °C) gründlich vermischt. 55 g der Mischung werden in eine Metallform (20 x 20 x 3 cm) gestopft und 1 Stunde bei 115 °C verklebt. Der Schaumstoff weist nach dem Entformen eine Dichte von 48 g/l auf.

b) Eine Schaumplatte gemäß Beispiel 10 a) wird beidseitig mit einer Alufolie kaschiert und durch kurzzeitiges Komprimieren in einer Kunststoffpresse auf 2,8 cm (10 s/220 °C) zu einem stabilen Verbundkörper verarbeitet.

Beispiel 11

Vorgeschäumte, blähfähige Polystyrol-Partikel (Schüttdichte: 18 g/l) und voluminöses Polyvinylchlorid-Fällungsprodukt (Schüttdichte: ca. 40 g/l) werden im Gewichtsverhältnis 1 : 2 gut vermischt und in die Metallform (20 x 20 x 3 cm) gefüllt. Durch Aufpressen von Dampf (115 °C/1 bar Überdruck/1 min) wird der EPS-Schaum verschweißt, so daß ein zusammenhängender Prüfkörper der Dichte 36 g/l entsteht.

Beispiel 12

100 g ungesättigter Polyester werden mit 2 g eines Kobaltbeschleunigers und dann mit 100 g des lockeren PVC-Materials (Schüttdichte: 60 g/l) gemischt. Weitere 100 g des ungesättigten Polyesters werden mit 4 g Methylethylketonperoxid und ebenfalls mit 100 g PVC-Schaum vermengt. Die benetzten PVC-Teilchen aus diesen beiden Vormischungen werden gut durchmischt, in eine Metallform gefüllt und bei 50 °C im Heizschrank gehärtet.

Beispiel 13

Das PVC-Fällungsmaterial (Schüttdichte 40 g/l) wird mit einer 10 %igen Wasserglaslösung gründlich benetzt, dann in eine Metallform gefüllt und bei 120 °C/20 mbar getrocknet. Es entsteht ein spröder Schaumstoff der Dichte 90 g/l.

Beispiel 14

Ein faseriges PVC-Fällungsprodukt der Schüttdichte 22 g/l

0073899
O.Z. 3758

wird zwischen zwei Kunststoffolien zu einem im Mittel 3 cm dicken Kissen (Fläche 20 x 20 cm) eingeschweißt.

Beispiel 15

Aus zwei dünnen, dichtgewebten Textilbahnen wird eine ca. 2 m$^2$ große und ca. 5 cm dicke Steppdecke mit Steppnähten im Abstand von 10 cm hergestellt. Als Füllmaterial setzt man ein feinfaseriges PVC-Material (Schüttdichte 18 g/l) ein. Eine solche Decke weist einen angenehm weichen Griff und eine gute Wärmedämmung auf. Der Füllstoff ist selbstverlöschend, das Gewicht beträgt ca. 2 kg.

**Beispiel 16**

Testergebnisse:

| Probe gemäß Beispiel Nr. | Probenmaterial | Dichte (g/1) | Wärmeleitfähig- keit (W/mk) | Durchbrenn- zeit (s) |
|---|---|---|---|---|
| 7 | Polyvinylchlorid-Leichtstoff | 60 | 0,036 | 22 |
| 8 | Polyvinylchlorid-Leichtstoff | 64 | 0,036 | 24 |
| 9 | a) PVC, Polyamid (9:1) | 90 | 0,041 | 81 |
|  | b) PVC, Polyamid (7:3) | 120 | 0,043 | 64 |
| 10 | a) PVC, Polyamid (9:1) | 48 | 0,035 | 20 |
|  | b) PVC, Polyamid, Alufolie | 55 | 0,035 | > 120 |
| 11 | Polyvinylchlorid, Schaumpoly- styrol (2:1) | 38 | 0,035 | 10 |
| 12 | Polyvinylchlorid, UP-Harz (1:1) | 200 | 0,044 | 110 |
| 13 | Polyvinylchlorid, Wasserglas | 80 | 0,049 | 41 |
| 14 | Polyvinylchlorid, Folienkissen | 22 | 0,037 | - |
| z. Vgl. | flammgeschütztes Schaumpolystyrol | 18 | 0,035 | 4 ! |

Die Wärmeleitfähigkeit der Polyvinylchlorid-Proben ist vergleichbar mit Schaumpolystyrol, der Feuerwiderstand ist jedoch wesentlich höher.

0073899

Patentansprüche:

1. Verfahren zur Herstellung von schwerentflammbaren Dämmstoffen auf der Grundlage von Polyvinylchlorid, dadurch gekennzeichnet, daß sie aus voluminösen PVC-Partikeln mit einem Partikelgewicht kleiner als 1 g und mit einer Schüttdichte von 10 bis 200 g/l hergestellt werden.

2. Verfahren nach Anspruch 1, dadurch gekennzeichnet, daß die voluminösen PVC-Partikel ein Partikelgewicht kleiner als 0,1 g und eine Schüttdichte von 20 bis 80 g/l aufweisen.

3. Verfahren nach den Ansprüchen 1 und 2, dadurch gekennzeichnet, daß die voluminösen Polyvinylchlorid-Partikel
   a. durch Einwirkungen von Wärme und/oder Zugabe von Bindemitteln zu Leichtkörpern verbunden werden oder
   b. mit Folien oder textilem Wandmaterial ummantelt werden.

4. Verfahren nach den Ansprüchen 1 bis 3, dadurch gekennzeichnet, daß die voluminösen PVC-Partikel bei Temperaturen von 160 bis 220 $^{\circ}$C zu einem Schaumstoff verbunden werden.

5. Verfahren nach Anspruch 4, dadurch gekennzeichnet, daß die voluminösen PVC-Partikel bei Temperaturen von 160 bis 220 $^{\circ}$C unter der Einwirkung von Wasserdampf zu einem Schaumstoff verbunden werden.

6. Verfahren nach den Ansprüchen 1 bis 3,
   dadurch gekennzeichnet,
   daß die voluminösen PVC-Partikel unter Verwendung eines Klebe- oder Bindemittels zu einem Schaumstoff verbunden werden.

7. Verfahren nach den Ansprüchen 1 bis 3 und 6,
   dadurch gekennzeichnet,
   daß die voluminösen PVC-Partikel unter Verwendung eines polymeren Schmelzklebers bei Temperaturen von 100 bis 160 $^{\circ}$C zu einem Schaumstoff verbunden werden.

8. Verfahren nach den Ansprüchen 1 bis 3 und 6,
   dadurch gekennzeichnet,
   daß als Bindemittel für die voluminösen PVC-Partikel ein schäumbares Polymeres verwendet wird.

9. Verfahren nach den Ansprüchen 1 bis 3,
   dadurch gekennzeichnet,
   daß die losen, voluminösen PVC-Partikel durch eine Folie oder ein textiles Gewebe ummantelt werden.